Europäisches Patentamt

European Patent Office

Office européen des brevets

(19)

(11) Veröffentlichungsnummer: **0 374 573 B1**

## (12) EUROPÄISCHE PATENTSCHRIFT

(45) Veröffentlichungstag der Patentschrift: **16.02.94**

(51) Int. Cl.5: **G02F 1/133**

(21) Anmeldenummer: **89122356.2**

(22) Anmeldetag: **04.12.89**

(54) **Verfahren zum Justieren von Flüssigkristallzellen-Platten.**

(30) Priorität: **22.12.88 DE 3843201**

(43) Veröffentlichungstag der Anmeldung:
**27.06.90 Patentblatt 90/26**

(45) Bekanntmachung des Hinweises auf die
Patenterteilung:
**16.02.94 Patentblatt 94/07**

(84) Benannte Vertragsstaaten:
**FR IT NL**

(56) Entgegenhaltungen:
**US-A- 4 597 636**
**US-A- 4 634 227**

**PATENT ABSTRACTS OF JAPAN, Band 5, Nr.
146 (P-80), 16. September 1981, Seite 91 P 80;
& JP-A-56 80 018**

**PATENT ABSTRACTS OF JAPAN, Band 2, Nr.
92 (E-78), 28. Juli 1978, Seite 4221 E 78; &
JP-A-53 55 139**

**PATENT ABSTRACTS OF JAPAN, Band 8, Nr.
82 (P-268), 14. April 1984, Seite 142 P 268; &
JP-A-59 131**

(73) Patentinhaber: **Nokia (Deutschland) GmbH
Östliche Karl-Friedrich-Strasse 132
D-75175 Pforzheim(DE)**

(72) Erfinder: **Thaler, Helmut
Limburgstrasse 97
D-7311 Dettingen(DE)**

## Beschreibung

Die Erfindung beschäftigt sich mit Justierproblemen, wie sie beim Herstellen von Flüssigkristallzellen beim Ausrichten der Elektrodenmuster auf den zwei Substratplatten einer solchen Zelle auftreten. Es geht hierbei um geeignete Substratplattenausgestaltungen und geeignete Justierverfahren. Die Substratplatten werden im folgenden der Kürze halber einfach als Platten bezeichnet.

Flüssigkristallzellenplatten bestehen entweder aus Glas oder aus Kunststofffolien. Ein bekannter Justierablauf für Glasplatten ist mit seinen wesentlichen Schritten in der linken Spalte der das Ende der Beschreibung bildenden Tabelle aufgeführt. Von besonderer Bedeutung ist der Verfahrensschritt s6, gemäß dem eine beliebige Frontplatte und eine beliebige Rückplatte, welche Platten zuvor mit Elektrodenmustern versehen wurden, aneinandergebracht werden und dann zum Erzielen von Deckung der Elektrodenmuster optisch justiert werden. Um das Justieren zu erleichtern, werden in der Regel mit den Elektrodenmustern zugleich Justiermarken hergestellt. Das Justieren erfolgt dann mit Hilfe dieser Marken statt durch unmittelbares Ausrichten der Elektrodenmuster aufeinander.

Ein Verfahren gemäß dem eben genannten ist in Pat.Abstr. Jap. P-268, 14. April 1984, Vol. 8, Nr. 82, JP 59-131(A) beschrieben. Dabei werden unmittelbar die Elektrodenmuster durch ein Mikroskop beobachtet. Nach erfolgreichem Ausrichten wird der im Randbereich der Platten vorhandene Kleber belichtet, damit er aushärtet und so den ausgerichteten Zustand fixiert.

Das optische Justieren von Justiermarken und insbesondere von Elektrodenmustern ist kompliziert und damit langwierig. Aufgrund dieses langwierigen Vorganges besteht erhöhte Verschmutzungsgefahr. Gelangt aber Schmutz zwischen die Platten, ist die fertige Flüssigkristallzelle in der Regel unbrauchbar.

Zum gegenseitigen Justieren von Flüssigkristallzellenplatten aus Kunststofffilmen haben sich mechanische Verfahren durchgesetzt. Zellen mit Kunststoffplatten weisen nur grobe Strukturen auf und müssen dementsprechend nur relativ ungenau justiert werden. In US-A-4,597,636 ist ausführlich darauf hingewiesen, daß Kunststoffplatten starken Längenschwankungen, abhängig von Temperatur und Feuchtigkeit, unterliegen. Justiertoleranzen von 100 $\mu$m können daher bei Displays von etwa 10 cm Kantenlänge und größer kaum unterschritten werden. Dies ist aber die Größenordnung, die Elektronenbahnen und Streifen zwischen Elektronenbahnen aufweisen, wie sie auf Glasplatten zum Herstellen von Flüssigkristallzellen hoher Auflösung verwendet werden. Dort muß also mit einer Genauigkeit im Bereich weniger Mikrometer justiert werden, d. h. mit einer Justiergenauigkeit, die mindestens um eine Zehnerpotenz höher liegt als bei Zellen mit Kunststoffplatten.

Das mechanische Justieren von Flüssigkristallzellenplatten aus Kunststoff erfolgt in der Regel durch Ausnehmungen in den Platten. So beschreibt Pat.Abstr. Jap. P-639, 21. November 1987, Vol. 11, Nr. 358, JP 62-134623(A) das Verwenden von je einem Loch nahe der Mitte der beiden Längsrandbereiche einer Platte. Pat.Abstr. Jap. P-80, 16. September 1981, Vol. 5, Nr. 146, JP 56-80018(A) beschreibt Kunststofffilme mit dreieckigen Löchern entlang einem Längsrand. Schließlich beschreibt US-4,597,636 Kunststofffilme, die runde oder rechteckige Löcher entlang ihrer beiden Längsränder aufweisen, oder die an mindestens einem Längsrand über vom Rand her eingeschnittene rechteckige Ausnehmungen verfügen. Es ist angegeben, daß die Löcher oder die Ausnehmungen beliebige Form haben können. Durch diese Löcher oder Ausnehmungen greifen beim Justieren Stifte. Dies sowohl beim gegenseitigen Justieren zweier Platten wie auch beim Justieren einer Platte auf eine Belichtungseinrichtung, wie dies inbesondere im genannten Abstract zu JP 56-80018(A) beschrieben ist.

Mit Anordnungen der eben genannten Art lassen sich Justiervorgänge einfach, aber nur sehr ungenau ausführen, gerade ausreichend für Flüssigkristallzellen mit Kunststofffilmen. Es ist insbesondere zu beachten, daß sich die Werkzeuge, die die Löcher oder Ausnehmungen anbringen, abnutzen. Die Löcher oder Ausnehmungen werden dann in der Regel immer kleiner, während die Justierstifte an den Justiervorrichtungen ihre Abmessungen im wesentlichen beibehalten. Um durch zu kleine Löcher oder Ausnehmungen Verspannungen beim Einführen der Filme in die Justiervorrichtungen zu vermeiden, werden die Löcher oder Ausnehmungen in der Regel mit etwas größerem Durchmesser ausgebildet, als es dem Durchmesser der justierenden Stifte entspricht.

Würden Löcher oder Ausnehmungen der genannten Art in Glasplatten angebracht werden, würde sich das eben beschriebene Problem noch weiter verstärken. Dies, weil sich Werkzeuge beim Bearbeiten von Glas erheblich stärker abnutzen als beim Bearbeiten von Kunststoff.

Der Erfindung liegt die Aufgabe zugrunde, eine Flüssigkristallzellenplatte sowie ein Verfahren anzugeben, die zum verbesserten Justieren beim Herstellen von Flüssigkristallzellen beitragen.

Das erfindungsgemäße Verfahren zum Justieren der beiden Substratplatten eines Substratplattenpaares einer Flüssigkristallzelle weist folgende Merkmale auf:
- es werden Substratplatten aus Glas verwendet;

- diese Substratplatten werden nach dem Herstellen von Elektrodenmustern, aber vor dem Ausführen mindestens eines weiteren Verfahrensschritts aufeinandergelegt und in herkömmlicher Weise optisch justiert;
- Anlageflächen werden direkt anschließend an den Justierschritt an den beiden justierten Platten in Draufsicht auf die Substratplatten deckungsgleich von außen angeschliffen, und
- beim Zusammensetzen zum Verkleben der Substratplatten werden diese dadurch justiert, daß die Anlageflächen durch mechanische Ausrichtmittel wieder zur Deckung gebracht werden.

Eine derart bearbeitete Flüssigkristallzellen-Substratplatte besteht aus Glas und weist mindestens zwei an mindestens einem Rand angeschliffene Anlageflächen auf.

Das erfindungsgemäße Justierverfahren kombiniert ein optisches mit einem mechanischen Justierverfahren. Die optische Justierung erfolgt allerdings nicht mehr unmittelbar vor dem Verkleben, sondern schon früher. Es wird also mindestens ein weiterer Verfahrensschritt zwischen dem Justieren und dem Verkleben ausgeführt. Der mechanische Verfahrensschritt unterscheidet sich insoweit von einem bekannten mechanischen Verfahrensschritt, daß an Glas vom Rand her angeschliffene Anlageflächen anstatt Löcher oder Aussparungen verwendet werden, die in eine Substratplatten-Kunststoffolie eingebracht sind. Der hochgenaue optische Justierschritt wird mit einem hochgenauen mechanischen Justierschritt kombiniert, wobei direkt anschließend an das optische Justieren die genannten Anlageflächen angeschliffen werden und dann mit diesen direkt vor dem Verkleben das hochgenaue mechanische Justieren erfolgt, das erheblich schneller ausgeführt werden kann als das hochgenaue optische Justieren. Dadurch kann im Verfahrensschritt vor dem Verkleben sehr schnell justiert werden, was den Vorteil mit sich bringt, daß kaum Beschädigungsgefahr für eine fast fertiggestellte Flüssigkristallzelle durch Verschmutzung besteht.

Die derart bearbeitete Flüssigkristallzellen-Substratplatte aus Glas ist für einen Verfahrensablauf geeignet, wie er bisher ähnlich nur mit Substratplatten aus Kunststoffolien ausgeführt werden konnte. Wie eingangs erläutert, wird beim Justieren von Kunststoffolien, z. B. beim Aufbringen von Elektroden oder beim Ausrichten der Substratplatten vor deren Verkleben, auf Löcher oder vom Rand her eingebrachte rechteckige Aussparungen Bezug genommen. Dies stellt eine geometrische Überbestimmung dar, die in der Praxis nur hingenommen werden kann, wenn man entweder in Kauf nimmt, daß sich die Folien beim Ausrichten verformen oder daß die Ausrichtmittel mit ziemlich großer Toleranz in die Löcher oder die rechteckigen Aussparungen eingreifen. Bei der erfindungsgemäßen Substratplatte sind dagegen mindestens zwei Anlageflächen von mindestens einem Rand her angeschliffen, was bei einer Substratplatte aus einer Kunststoffolie gar nicht möglich ist, welche geschliffene Anlageflächen es ermöglichen, eine hochgenaue mechanische Justierung ohne geometrische Überbestimmung vornehmen zu können.

Die Erfindung wird im folgenden anhand von durch Figuren veranschaulichten Ausführungsbeispielen näher beschrieben.

Fig. 1a - 1e     schematische Draufsichten auf eine Frontplatte und eine Rückplatte für eine Flüssigkristallzelle in verschiedenen Verfahrenszuständen;

Fig. 2     schematischer Querschnitt durch ein Ausrichtmittel für gemeinsam geschliffene Platten;

Fig. 3     eine Darstellung entsprechend der von Fig. 2, jedoch für getrennt voneinander geschliffene Platten oder für einen Maskenrahmen und eine Platte;

Fig. 4     schematische Draufsicht auf eine Platte mit plangeschliffenen Anlageflächen;

Fig. 5     schematischer Querschnitt durch einen Teil einen Ausrichtmittels für Platten mit Anlageflächen gemäß Fig. 4; und

Fig. 6     schematische Draufsicht auf eine Platte mit einer als Einkerbung geschliffenen Anlagefläche und einer plan geschliffenen Anlagefläche.

Anhand des Verfahrensablaufs gemäß der mittleren Spalte der Tabelle am Beschreibungsende und mit Hilfe der Fig. 1a - 1e wird nun ein bevorzugtes Ausführungsbeispiel zum mechanischen Justieren beim Zusammenfügen der Platten einer Flüssigkristallzelle vor deren Verkleben erläutert.

Beim Verfahrensstand gemäß Fig. 1a ist vorausgesetzt, daß die Schritte s1 bis s4 gemäß der mittleren Spalte der Tabelle abgelaufen sind. Die aufgebrachten Elektrodenmuster sind nicht dargestellt, jedoch Justiermarken 10, wie sie gemeinsam mit den Elektrodenmustern auf der Frontplatte 11 und der Rückplatte 12 aufgebracht worden sind. Die beiden Platten sind aufeinandergelegt, jedoch noch nicht justiert, so daß sich die Justiermarken 10 noch nicht decken. Bei der in Fig. 1a dargestellten Lage ist ein Verschieben der Frontplatte 11 nach rechts unten in bezug auf die Rückplatte 12 erforderlich, gemäß dem dargestellten Verschiebepfeil 13.

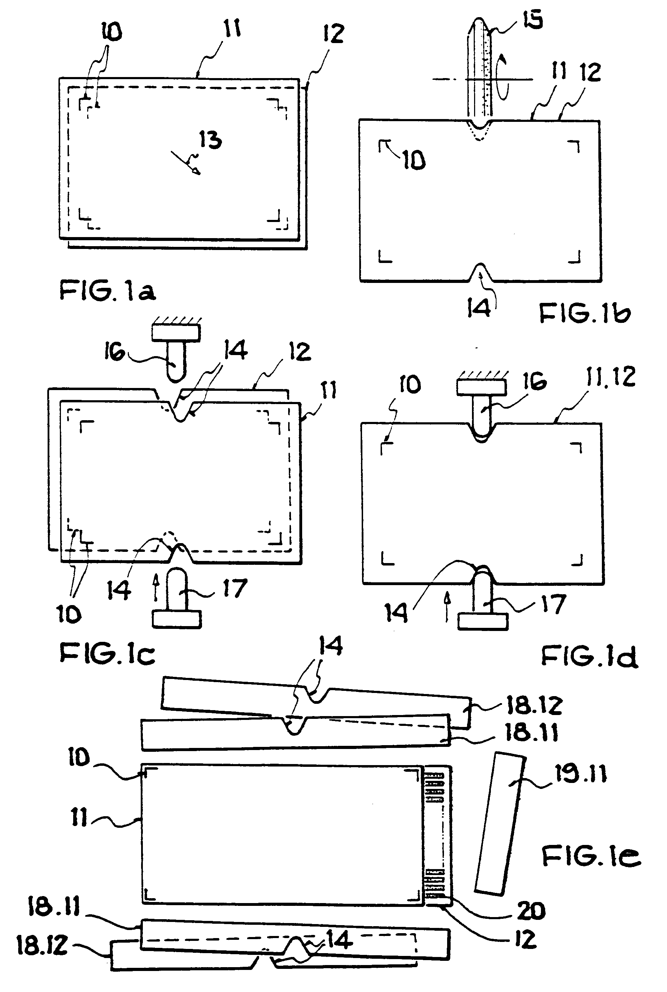

Die optisch justierten Platten werden gemäß Fig. 1b mit geschliffenen Anlageflächen versehen, die beim bevorzugten Ausführungsbeispiel als Einkerbungen 14 ausgebildet sind. Im Verfahrenszustand gemäß Fig. 1b ist die im Bild untere Einkerbung bereits für die Frontplatte 11 und die Rückplatte 12 vollendet, während die jeweilige Einkerbung am oberen Rand der beiden Platten gerade hergestellt wird. Dies erfolgt mit Hilfe eines Schleifrades 15, dessen Drehachse von einer Ebene unterhalb der Plattenebene bis in eine Ebene oberhalb der Plattenebene bewegt wird.

Die anhand der Fig. 1a und 1b erläuterten Verfahrensschritte entsprechen den Schritten z1, s7 und z2 gemäß der mittleren Spalte der Tabelle am Beschreibungsende. Die Schritte z1 und z2 sind zusätzliche Schritte, die beim bekannten Verfahren gemäß der linken Spalte nicht erforderlich sind.

Nach dem Anbringen der Anlageflächen schließen sich weitere Verfahrensschritte an, insbesondere das Aufbringen einer Isolier- und/oder Ausrichtschicht und das Auftragen von Kleber. Die Schrittfolge z1, s7, z2 kann auch erst nach dem Aufbringen von Schichten erfolgen. Vorteilhafter ist jedoch die vorherige Justierung, erstens, weil dann keine Beschädigungsgefahr für die Schichten besteht und zweitens, weil die Justiermarken vor dem Aufbringen von Schichten deutlicher erkennbar sind als danach.

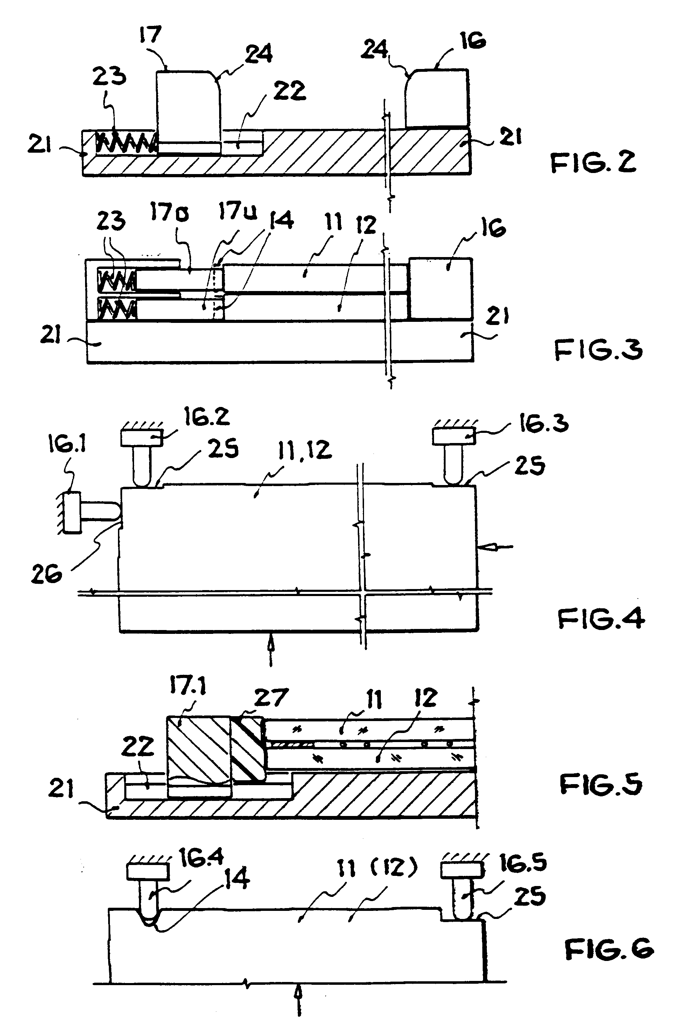

Nachdem im Schritt s5 Kleber aufgetragen ist, werden in einem Schritt s6' die Platten eines Paares gemäß Fig. 1c aneinandergebracht, wobei sie durch Ausrichtmittel mit Hilfe der Anlageflächen mechanisch gemäß Fig. 1d justiert werden. Die Ausrichtmittel sind ein fester Anschlag 16 und ein beweglicher Anschlag 17. Gemäß den Fig. 1c und 1d erfolgen das Aneinanderbringen der Platten eines Paares und das Ausrichten mit Hilfe der Anschläge 16 und 17 aufeinanderfolgend. Es ist jedoch zu beachten, daß es sich zeitlich nur um einen einzigen Verfahrensschritt handelt, da entweder die Anschläge bereits während des Aneinanderbringens der Platten wirken, was weiter unten anhand von Fig. 2 näher erläutert wird, oder da das Bewegen des beweglichen Anschlags 17 zum mechanischen Ausrichten der Platten nur eine Zeitspanne in Anspruch nimmt, die gegenüber der des vorsichtigen Aneinanderführens der Platten vernachlässigbar ist.

Da die beiden Platten beim Aneinanderbringen mechanisch justiert werden, folgen direkt die abschließenden Teilschritte gemäß dem Verfahrensschritt s8, also das Verkleben der Platten, das Einfüllen von Flüssigkristall, das Abdichten und das Abbrechen von Randstreifen. Das Abbrechen von Randstreifen ist in Fig. 1e dargestellt. Es werden zwei Längsrandstreifen 18.11 von der Frontplatte 11, zwei Längsrandstreifen 18.12 von der Rückplatte 12 und ein Querstreifen 19.11 von der Frontplatte 11 abgebrochen. Die Rückplatte 12 steht dann an einer Querseite über die Frontplatte 11 über; sie trägt am überstehenden Rand Kontaktierelektroden 20.

Durch Vergleichen der Verfahrensschritte gemäß dem Stand der Technik und der erläuterten Ausführung 1, also gemäß der linken und der mittleren Spalte der Tabelle am Beschreibungsende, wird erkennbar, daß bei Ausführung 1 die Verfahrensschritte z1 und z2 zusätzlich zu Verfahrensschritten gemäß dem Stand der Technik erforderlich sind und daß der Verfahrensschritt s7 zwischen die zusätzlichen Verfahrensschritte z1 und z2 vorgezogen wurde.

Trotz der zusätzlichen Verfahrensschritte ist das Verfahren gemäß Ausführung 1 gegenüber dem bekannten Verfahren von Vorteil, da die Verschmutzungsgefahr beim abschließenden mechanischen Justieren gemäß Schritt s6' erheblich geringer ist als dann, wenn das abschließende Justieren gemäß dem optischen Justierschritt s7 erfolgt.

Ein Referenzverfahren, wie in der rechten Spalte der Tabelle am Beschreibungsende aufgeführt, kommt ganz ohne optisches Justieren aus, da gleich zu Anfang geschliffene Anschlagflächen an den Platten angebracht werden und dann auf diese auch beim Herstellen der Elektrodenmuster Bezug genommen wird. Dementsprechend erfolgt der Verfahrensschritt z2, also das Anschleifen von Anlageflächen, z. B. Einkerbungen 14, als erster Verfahrensschritt. Es sei zunächst angenommen, es handle sich nur um zwei Platten, die gemeinsam geschliffen werden, um später eine Frontplatte 11 und eine Rückplatte 12 zu bilden. Auf die geschliffenen Anlageflächen wird beim folgenden Schritt s1' Bezug genommen, der sich vom herkömmlichen Schritt s1 dadurch unterscheidet, daß die Frontplatte nicht nur grob ausgerichtet mit der Frontmustermaske in Kontakt gebracht wird, sondern daß die Frontplatte und die Frontmustermaske durch Ausrichtmittel mit Hilfe der Anlageflächen mechanisch genau aufeinander ausgerichtet werden. In einem folgenden Schritt s2 wird das Frontelektrodenmuster in üblicher Art und Weise hergestellt, wobei es jedoch nicht mehr erforderlich ist, optische Justiermarken anzubringen. Der sich dann anschließende Verfahrensschritt s3' ist dem Verfahrensschritt s1' ähnlich, jedoch wird nun unter Bezugnahme auf die Anlageflächen die Rückplatte gegenüber der Rückmustermaske ausgerichtet. In einem Schritt s4 wird in herkömmlicher Weise das Rückelektrodenmuster hergestellt, und es folgen weitere Verfahrensschritte gemäß dem bereits erläuterten Schritt s5.

In der Tabelle am Beschreibungsende ist in der rechten Spalte als Schritt nach dem Schritt s5 ein Schritt s6'' eingezeichnet, der sich auf das gegenseitige Justieren beliebiger Rück-und Frontplatten gegeneinander bezieht. Wurden jedoch in Schritt z2 nur die Platten eines Paares gemeinsam geschliffen, schließt sich an Schritt s5 der bereits erläuterte Schritt s6' an. In beiden Fällen folgt unmittelbar anschließend Schritt s8.

4

Das Referenzverfahren unterscheidet sich somit von Ausführung 1 dadurch, daß der optische Justierschritt s7 ersatzlos weggefallen ist. Ersatzlos deshalb, weil die mechanischen Justierschritte, die Teilschritte der Verfahrensschritte s1′ bzw. s3' sind, ohne besonderen Aufwand beim Zusammensetzen einer Platte mit der zugehörigen Mustermaske ausgeführt werden. Das Referenzverfahren arbeitet schneller als das gemäß Ausführung 1. Jedoch sind an den Mustermasken besondere Ausrichtmittel erforderlich.

Bei diesem Referenzverfahren werden Platten nicht paarweise bearbeitet, sondern ganze Stapel von Platten werden mit geschliffenen Anlageflächen in einem Arbeitsgang versehen. Frontplatten 11 und Rückplatten 12 werden beliebig zusammengeführt. Dies, weil in allen Verfahrensschritten, an denen es auf genaue Ausrichtung ankommt, immer Bezugnahme auf dieselben Anlageflächen stattfindet.

Ferner ist nicht für jedes Plattenpaar ein optischer Ausrichtvorgang erforderlich. Es muß vielmehr vor Inbetriebnahme der Herstelleinrichtungen dafür gesorgt werden, daß alle mechanischen Ausrichtmittel genau gleich ausrichten. Dies muß auch von Zeit zu Zeit kontrolliert werden. Ist dieser einmalige Einrichtvorgang erfolgt, erfolgt jedes weitere Justieren sozusagen automatisch beim Einsetzen in Fertigungseinrichtungen, die mit den Ausrichtmitteln versehen sind.

Anhand von Fig. 2 wird das in den Fig. 1c und 1d nur schematisch dargestellte Ausrichtmittel genauer erläutert. Der feste Anschlag 16 ist mit einer Auflageplatte 21 fest verbunden. Der bewegliche Anschlag 17 ist dagegen in einer T-Nut 22 verschiebbar geführt, wobei er durch eine Feder 23 auf dem festen Anschlag 16 zugedrückt wird. Beide Anschläge weisen an ihren oberen Enden an den einander zugewandten Kanten je eine Abrundung 24 auf. Die einander zugewandten Kanten sind halbkreisförmig ausgebildet, wie aus den Fig. 1c und 1d erkennbar. Die Abrundungen 24 dienen dazu, daß dann, wenn eine Frontplatte 11 und eine Rückplatte 12 von oben auf die Auflageplatte 21 zu bewegt werden, die Anschläge 16 und 17 in die zugehörigen Einkerbungen 14 einfädeln und dann die mechanische Ausrichtung vornehmen.

Dieses Ausrichten mit nur einem einzigen beweglichen Anschlag 17 arbeitet jedoch nur dann zufriedenstellend, wenn Platten paarweise geschliffen und weiterverarbeitet werden, oder wenn strengstens darauf geachtet wird, daß alle geschliffenen Anlageflächen gleich ausgebildet sind. Dies ist jedoch eine schwer einzuhaltende Bedingung, die u. a. zur Folge hätte, daß das Schleifrad 15 sehr häufig ausgewechselt werden müßte. Ändert sich nämlich durch Abnutzung dessen Form, ändert sich auch die Form der Einkerbungen 14, d. h. ihre Einschnittiefe und ihr Öffnungswinkel ändern sich. Dann kann jedoch ein einziger beweglicher Anschlag 17 nicht mehr gegen die zugehörigen Anlageflächen an Frontplatte 11 und Rückplatte 12 gemeinsam drücken. Dies ist jedoch mit einer geteilten Ausführung der beweglichen Anschläge gemäß Fig. 3 möglich. Es sind ein oberer beweglicher Anschlag 17.o und ein unterer beweglicher Anschlag 17.u vorhanden. Der untere bewegliche Anschlag 17.u drückt federbelastet gegen die Rückplatte 12 und der obere bewegliche Anschlag 17.o drückt federbelastet gegen die Frontplatte 11.

Eine mechanische Justiereinrichtung gemäß Fig. 3 ist auch dann sinnvoll, wenn ein Mustermaskenrahmen und eine Platte aufeinander auszurichten sind. Es wird darauf hingewiesen, daß es möglich ist, eine Justiereinrichtung gemäß Fig. 2 fest mit einem Maskenrahmen zu verbinden. Dann muß jedoch die in den Rahmen gesetzte Maske genau auf die Ausrichtmittelgeometrie ausgerichtet werden. Einfacher ist es, eine Frontmustermaske und eine Rückmustermaske jeweils in einen zugehörigen Rahmen fest einzusetzen, die beiden Rahmen so zueinander zu bewegen, daß optische Justiermarken auf den Masken miteinander zur Deckung kommen, und dann Anlageflächen anzuschleifen, z. B. Einkerbungen 14 gemäß Fig. 1b, mit Hilfe derer die Rahmen genauso ausgerichtet werden können wie die Platten. Da sich die eine Rahmeneinkerbung im Laufe der Zeit praktisch nicht ändert, Platteneinkerbungen jedoch wegen der oben angegebenen Probleme mit dem Schleifwerkzeug variieren können, ist es von Vorteil, zum gegenseitigen Ausrichten eines Maskenrahmens und einer Platte eine Justiereinrichtung mit beweglichen Anschlägen zu verwenden, also eine Anordnung mit der Funktion der Anordnung gemäß Fig. 3.

Fig. 4 zeigt eine andere Anordnung von Anlageflächen als Fig. 1b. Es sind zwei plane Längsseiten-Anlageflächen 25 und eine plane Querseitenanlagefläche 26 angeschliffen. Jede Platte wird durch eine auf die gegenüberliegende Längsseite wirkende Kraft und eine auf die gegenüberliegende Querseite wirkende Kraft zur Anlage an festen Anschlägen 16.1 - 16.3 gebracht. Die Kräfte können z. B. durch Andrücken eines Gummipolsters 27 aufgebracht werden, wie in Fig. 5 dargestellt. Das Gummipolster 27 ist auf einem beweglichen Anschlag 17.1 aufgesetzt, der entsprechend wie der bewegliche Anschlag 17 gemäß Fig. 2 in einer T-Nut 22 geführt ist.

Die Anordnung von Anlageflächen gemäß Fig. 4 erlaubt es nicht, einen nichtelastischen, beweglichen Anschlag 17 gemäß Fig. 2 zu verwenden. Dies, weil ein solcher Anschlag voraussetzt, daß die Kanten von Frontplatte 11 und Rückplatte 12, an denen er zur Anlage kommen soll, genau deckungsgleich sind. Dies ist jedoch nur dann der Fall, wenn derartige Kanten nicht nur gebrochen, sondern zusätzlich geschliffen sind. Um die besonders einfache Justiereinrichtung gemäß Fig. 2 zu verwenden, müßten also noch zwei weitere geschliffene Flächen an jeder Platte angebracht werden, jeweils dort, wo die genannten Andrückkräfte wirken sollen.

Eine Anordnung von Anlageflächen, die sehr stabil ist gegen Drehmomente, aber nur zwei Schleifvorgänge erfordert, oder erforderlichenfalls einen dritten, wenn eine Justiereinrichtung gemäß Fig. 2 verwendet werden soll, ist in Fig. 6 dargestellt. Die eine Anlagefläche ist eine Einkerbung 14, während die andere eine plane Längsseitenanlagefläche 25 ist. Es liegen zwei feste Anschläge 16.4 und 16.5 vor, wobei der eine in die Einkerbung 14 greift und am anderen die plane Längsseitenanlagefläche 25 anliegt. Die Platte wird durch eine Kraft gegen diese Anschläge gedrückt, die von der freien Längsseite her wirkt.

Die Anordnungen von Anlageflächen gemäß den Fig. 1b, 4 und 6 dienen nur zur Veranschaulichung. Anlageflächen können z. B. dadurch gebildet sein, daß alle Plattenkanten durchgehend geschliffen werden. Weniger Schleifaufwand ist jedoch erforderlich, wenn nur diejenigen örtlich begrenzten Kantenbereiche geschliffen werden, die als Anlageflächen für den mechanischen Justiervorgang dienen. Von außerordentlich großem Vorteil ist es, wenn mindestens eine der Anlageflächen als Einkerbung ausgebildet ist. Dies wird leicht durch Vergleich der Anlage und Kraftverhältnisse bei den Ausführungsformen gemäß den Fig. 1c und 6 gegenüber der Ausführungsform von Fig. 4 ersichtlich. Bei der Ausführungsform 4 ohne Einkerbungen ist eine Vorrichtung mit drei Ausrichtmitteln und zwei Kraftausübemittel erforderlich. Wenn dagegen eine Anlagefläche als Einkerbung ausgebildet ist, wie bei der Ausführungsform gemäß Fig. 6, benötigt die Vorrichtung nur noch zwei Ausrichtmittel und ein Kraftausübemittel. Bei der bevorzugten Ausgestaltung gemäß Fig. 1c mit zwei Einkerbungen als Anlageflächen benötigt die Vorrichtung nur noch zwei Ausrichtmittel und kein einziges Kraftausübemittel. Dies, weil die beiden in Einkerbungen eingreifenden Ausrichtmittel nicht nur die Platten ausrichten, sondern sie auch zugleich gegen Verrutschen sichern. Ob bei der praktischen Anwendung die Ausführungsform gemäß Fig. 6 oder diejenige gemäß Fig. 1c vorteilhafter ist, hängt insbesondere von der Dimension der Platten ab. Sind beim Ausrichten keine zu großen Drehmomente zu überwinden und kann genug freier Rand für späteres Abbrechen vorgesehen werden, sind zwei Einkerbungen am vorteilhaftesten. Sind dagegen große Drehmomente zu überwinden, ist es vorteilhafter, die Anordnung gemäß Fig. 6 mit nur einer Einkerbung zu wählen.

TABELLE

| Stand der Technik | Ausführung 1 | Referenzverfahren |
|---|---|---|
| | | z2) Platten mit geschliffenen Anlageflächen versehen |
| s1) Frontplatte auf Frontmustermaske legen | s1) Frontplatte auf Frontmustermaske legen | s1') Frontplatte auf Frontmustermaske legen, wobei durch Ausrichtmittel mit Hilfe der Anlageflächen mechanische Ausrichtung in Bezug auf die Frontmustermaske erfolgt |
| s2) Frontelektrodenmuster herstellen | s2) Frontelektrodenmuster herstellen | s2) Frontelektrodenmuster herstellen |
| s3) Rückplatte auf Rückmustermaske legen | s3) Rückplatte auf Rückmustermaske legen | s3') Rückplatte auf Rückmustermaske legen, wobei durch Hilfe der Anlageflächen mechanische Ausrichtung in Bezug auf die Rückmustermaske erfolgt |
| s4) Rückelektrodenmuster herstellen | s4) Rückelektrodenmuster herstellen | s4) Rückelektrodenmuster herstellen |
| | z1) Beliebige Frontpl. und beliebige Rückplatte aufeinanderlegen | |
| | s7) Auf Musterdeckung optisch justieren | |
| | z2) Platten mit geschliffenen Anlageflächen versehen | |

7

| s5) Weitere Schritte<br>Kleber auftragen | s5) Weitere Schritte<br>Kleber auftragen | s5) Weitere Schritte<br>Kleber auftragen |
|---|---|---|
| s6) Beliebige Front-<br>platte u.bel. Rück-<br>platte aneinander<br>bringen | s6') Pl.eines Paares<br>aneinander bringen,<br>wobei durch Ausricht-<br>mittel die Platten<br>mit Hilfe der Anlage-<br>flächen mechanisch<br>justiert werden | s6'') Bel. Frontplatte<br>und beliebige Rück-<br>platte aneinander<br>bringen, wobei durch<br>Ausrichtmittel die<br>Platten mit Hilfe der<br>Anlageflächen mechan.<br>justiert werden |
| s7) Auf Musterdeckung<br>optisch justieren | | |
| s8) Platten verkleben<br>FK einfüllen<br>abdichten<br>Randstr. abbrechen | s8) Platten verkleben<br>FK einfüllen<br>abdichten<br>Randstr. abbrechen | s8) Platten verkleben<br>FK einfüllen<br>abdichten<br>Randstr. abbrechen |

**Patentansprüche**

1. Verfahren zum Justieren der beiden Substratplatten eines Substratplattenpaares einer Flüssigkristallzelle zueinander, bei dem beim Zusammensetzen zum Verkleben diese dadurch justiert werden, daß Anlageflächen durch mechanische Ausrichtmittel in Draufsicht auf die Platten zur Deckung gebracht werden,
   **dadurch gekennzeichnet,** daß
   - Substratplatten aus Glas verwendet werden,
   - diese Substratplatten nach dem Herstellen von Elektrodenmustern, aber vor dem Ausführen mindestens eines weiteren Verfahrensschrittes aufeinandergelegt und in herkömmlicher Weise optisch zueinander justiert werden und
   - die genannten Anlageflächen direkt anschließend an den Justierschritt ausgebildet werden, indem in die Ränder des jeweiligen Substratplattenpaares Vertiefungen deckungsgleich von außen eingeschliffen werden.

2. Verfahren nach Anspruch 1, **dadurch gekennzeichnet,** daß zwei Anlageflächen in Form von Einkerbungen (14) ausgebildet werden, von denen jeweils eine in jedem von zwei parallelen Rändern jeder Substratplatte angeschliffen ist.

3. Verfahren nach Anspruch 1,
   **dadurch gekennzeichnet,** daß
   als Anlageflächen eine von einem Rand her eingeschliffene Einkerbung (14) und eine plane eingeschliffene Randfläche (25) ausgebildet werden.

4. Verfahren nach Anspruch 1,
   **dadurch gekennzeichnet,** daß
   als Anlageflächen drei eingeschliffene Randflächen (25, 25, 26) ausgebildet werden, von denen zwei (25, 25) an einer ersten Kanten jeder Substratplatte liegen und die dritte (26) an einer zweiten Kante liegt, die rechtwinklig zur ersten steht.

## Claims

1. A method for adjusting the two substrate plates of a pair of such substrate plates in a liquid crystal cell in relation to one another, whereby when said plates are brought together for bonding, they are adjusted by contact surfaces being aligned, in the plan view of said plates, by mechanical aligning means,
   **characterized in that**
   - substrate plates made of glass are used,
   - said substrate plates are placed one on top of the other after manufacture of electrode patterns but before the implementation of at least one further process step, and are optically aligned with one another in conventional manner, and
   - said contact surfaces are formed directly following the adjustment step by recesses being ground in from the outside and congruently into the edges of the respective pair of substrate plates.

2. A method in accordance with Claim 1,
   **characterized in that**
   two contact surfaces are formed in the shape of notches (14), one each of which is ground into each of two parallel edges of each substrate plate.

3. A method in accordance with Claim 1,
   **characterized in that**
   a notch (14) ground in from the edge and a plane ground-in edge surface (25) are formed as contact surfaces.

4. A method in accordance with Claim 1,
   **characterized in that**
   as contact surfaces three ground-in edge surfaces (25, 25, 26) are formed, two of which (25, 25) are located at a first edge of each substrate plate and the third (26) at a second edge which is at right angles to said first edge.

## Revendications

1. Procédé pour l'ajustage des deux plaques de substrat d'une paire de plaques de substrat d'une cellule à cristal liquide l'une par rapport à l'autre, dans lequel, pendant l'assemblage pour le collage, elles sont ajustées par le fait que les surfaces à joindre sont mises en coïncidence par des moyens d'alignement en vue de dessus sur les plaques,
   **caractérisé en ce que**
   - on utilise des plaques de substrat en verre,
   - ces plaques de substrat sont après la fabrication d'électrodes modèles, mais avant d'effectuer au moins une autre phase de procédé, superposées et ajustées optiquement l'une par rapport à l'autre de manière traditionnelle et
   - que lesdites surfaces à joindre sont formées aussitôt après la phase d'ajustage, en meulant à partir de l'extérieur dans les bords de la paire de plaques de substrat respectives des cavités coïncidantes.

2. Procédé selon la revendication 1,
   **caractérisé en ce que**
   deux surfaces à joindre sont formées sous forme d'entailles (14), dont chacune est meulée respectivement dans chacun des deux bords parallèles de chaque plaque de substrat.

3. Procédé selon la revendication 1,
   **caractérisé en ce que,**
   comme surfaces à joindre, une entaille (14) à partir d'un bord et une face plane (25) sont formées par meulage.

4. Procédé selon la revendication 1,
   **caractérisé en ce que,**
   comme surfaces à joindre, trois surfaces de bord (25, 25, 26) sont meulées, dont deux (25, 25) se trouvent sur une première arête de chaque plaque de substrat et la troisième (26) sur une deuxième arête orthogonale à la première.

EP 0 374 573 B1

FIG.1a

FIG.1b

FIG.1c

FIG.1d

FIG.1e

11

FIG. 2

FIG. 3

FIG. 4

FIG. 5

FIG. 6